# EUROPEAN PATENT APPLICATION

(11) **EP 2 853 520 A1**
(43) Date of publication of application: **01.04.2015**
(21) Application number: 13461549.1
(22) Date of filing: 26.09.2013
(51) Int. Cl.: C04B 33/04, C04B 35/626, C09K 8/80

(54) **Ceramic proppants of medium strength and a method for manufacturing thereof**

(71) Applicant: Baltic Ceramics S.A., 68-300 Lubsko (PL)
(72) Inventor: MARCHWICKI, Maciej, 68-100 Zagan (PL)
(74) Representative: Pawlowski, Adam

(57) **Abstract**

Ceramic proppants characterized in that they are made of a mixture of raw components consisting of:
- plastic kaolinite clay from 10% to 50% by weight;
- white-firing clay from 10% to 50% by weight;
- bauxite from 40% to 60% by weight;
- and treatment agents up to 10% by weight.

## Description

The present invention relates to ceramic proppants of a medium strength, suitable for use in hydraulic fracturing of rocks having low permeability, in order to effectively extract hydrocarbons - oil, condensate and shale gas from non-conventional sources. The permeability relates to the capability of conducting material. For hydrocarbon sources, permeability may describe the capability of conducting the extracted hydrocarbon - the more porous structure of the source, the easier and faster the hydrocarbons can be extracted. The permeability of rocks with conventional hydrocarbon sources is measured in microdarcy units (µD). However, the permeability of non-conventional sources, mainly shale rocks, is measured in nanodarcy units (nD), i.e. the permeability is 1000 times smaller in magnitude.

### PRIOR ART

Hydraulic fracturing is a process used to improve the permeability of rocks by creating a net of multiple fractures, which may form flow paths for the extracted hydrocarbons. Proppants are used to prevent the fractures from closing and to increase the width of individual fractures. The proppants are pressed together with the fracturing liquid into the rocks, move within the rocks, fill the rocks and stay within the rocks to prevent closing of fractures. Therefore, the quality of the proppants, as characterized by various parameters, impacts the effectiveness of thy process of oil and gas extraction. Proppants can be used to stimulate both vertical bores (characteristic for conventional gas sources) and horizontal bores (characteristic for non-conventional gas sources).

Proppants are small beads having a spherical shape, typically ceramic. The main role of the proppants is to keep open the rock fractures that have been formed. The material that keeps the fractures open improves the permeability of the fractures, as it allows free flow of extracted hydrocarbons. Due to the fact that the flow of hydrocarbons is directly dependent on the quality of proppants, the proppant properties are very important, as they determine the effectiveness of hydrocarbons extraction process. The better quality of the proppants used, the better extraction effects can be achieved. High quality proppants, having high compression strength, improve the permeability, which is the key parameter of the hydrocarbons extraction process.

Hydraulic fracturing involves pressing, into the bore, a fracturing liquid comprising water with chemicals and proppants, under high pressure. This enables the proppants to be transported into the fractures, prevents the fractures from closing and increases the width of the fractures. Recently, more and more attention is drawn to the so-called waterless fracturing, which is a more ecological alternative for the most popular water-based fracturing. The waterless techniques utilize the following media to transport proppants: CO₂, N₂ and mixtures of light hydrocarbons - propane-butane (LPG), called a liquid gas. The most technologically advanced methods have been used with LPG, which must be gelled before use.

Currently, several types of proppants are manufactured. The following types may be distinguished depending on the material of proppants: proppants based on natural quartz sand, natural quartz sand coated with special coatings, proppants based on bauxites and ceramic proppants, based on a mixture of several types of clay, kaolins or bauxites - the components may be used in various ratios. No only quartz sand can be coated - the ceramic proppants can be coated as well. Each group of proppants has a characteristic parameter - a compression strength. The compression strength is important, as the proppants are used at a depth of several kilometers, typically 1 to 5 kilometers, depending on the bore. The proppants can be sorted on the basis of their strength as follows: the quartz sand proppants (smallest strength), ceramic proppants and coated sand (similar, moderate strengths), and sintered bauxite and coated ceramic proppants (the highest strength). The strength of proppants depends on the chemical content of their components - the strength and specific gravity increases along with increased content of aluminum oxide Al₂O₃ and ferrum oxide Fe₂O₃.

Proppants can be further characterized by the following technical parameters: distribution of grain size, specific gravity, bulk density, roundness, sphericity, compression strength, turbidity and solubility in acids. The distribution of grain size determines the quality of the material - uniform grain size allows free flow of hydrocarbons. The specific gravity is essential as the proppants must be suspended in the liquid medium during hydraulic fracturing. The bulk density is essential while transporting the proppants and when taking into account the geometry of the fracture. The roundness determines the smoothness of the surface. The sphericity determines how similar the grain is to a sphere. The compression strength determines the amount of material which can be destroyed under heavy pressures in the bore. The turbidity determines the amount of impurities, such as dust, grid, small rock fractures, which are present in the fracturing liquid. The solubility in acids informs about the resilience of the material to acids such as HCl or HF, which are components of the fracturing liquids.

The properties presented above impact the efficiency of hydrocarbons extraction and allow to classify the proppants depending on their quality and application. Well-selected and high quality proppants allow to achieve good permeability of rocks, and therefore efficient conduction of extracted hydrocarbons.

Natural frac sand has irregular grains, which results in uneven grain size distribution. Sand has a roundness from 0,6 to 0,8 which causes decrease of extraction effectiveness and leads to clogging of rock channels, and therefore closure of extraction paths, and decreases the efficiency of the bore. The sphericity of quartz sand is from 0,6 to 0,8. This type of natural proppants has a specific gravity from 2,5 to 2,7 Mg/m³, and a bulk density of about 1,5 Mg/m³. The compression strength of typical quartz sand is 5 000 psi, which classifies it as the least durable of all proppants used in commerce. However, quartz sand is the cheapest type of proppants, and therefore it is the most frequently used proppant.

Another type of proppants is resin coated sand (RCS). Resin coating is used to improve the use properties of the proppants. The coating improves the roundness and compression strength. The coating also decreases the conductivity losses, which arise from bits when the proppants are crushed. The bits result from high pressure in the bore, which affects the proppants and surrounding rocks. For coated proppants, the bits are kept within the coating, and therefore do not block the light of the channel and do not disturb the flow of extracted hydrocarbons. in addition, coating sand by resin, which leads to improved roundness, leads to optimal distribution of proppants in the fracture, which improves the flow of hydrocarbons as compared to channels with less round beads and having less regular shapes. The roundness and sphericity of RCS have typically the values from 0,7 to 0,9. The specific gravity of RCS is from 2,5 to 3,1 Mg/m³ and the bulk density is from 1,5 to 1,9 Mg/m³.

Bauxite proppants are characterized by high compression strength, reaching up to 20 000 psi, which makes them the strongest of all proppants. The disadvantage of sintered bauxite proppants is a high specific gravity, above 3,5 Mg/m³, which increases the cost. increased specific gravity leads to use of more expensive and more viscous fracturing liquids to allow suspension of proppants during their transport. Moreover, liquids having higher viscosity require pumps of higher power, which leads to increased costs and decreases the profitability of the process. Therefore, it is important to manufacture proppants having a high compression strength but a low specific gravity. The bulk density of bauxite proppants is typically above 1,9 Mg/m³. Bauxite proppants have a roundness and sphericity of about 0,7 - 0,9. Taking into account their chemical and mineralogical content, bauxite proppants can be classified as ceramic proppants.

The next group of proppants, which is currently under strongest development, are ceramic proppants. Ceramic proppants are made mainly of mixtures of clays, kaolins, bauxites and other additives, which improve the proppants properties. Taking into account the specific gravity of ceramic proppants, they can be classified as medium-weight, light and ultralight. Ceramic proppants have a roundness of 0,8 to 0,9, and often above 0,9. They have a sphericity of 0,8 to 0,9 and a high compression strength, equal to 10 000 psi and above. The specific gravity of ceramic proppants is from 2,4 to 3,2 Mg/m³ (depending on the type) and the bulk density is from 1,1 to 1,9 Mg/m³.

For example, high-strength proppants have been described in the US patent US4713203. It discloses bauxite-based proppants having Al₂O₃ content from 57% to 63% and SiO₂ content from 7% to 11 %. Raw bauxite comprises 30-50% gibbsite, 22-45% boehmite and 16-24% kaolinite. Such bauxite proppants, fired in the temperature from 1350°C to 1500°C, have a strength of about 20 000 psi and a specific gravity below 3,4 Mg/m³. Proppants having such parameters have been obtained i.a. by selective selection of bauxite fractions, from 0,02 to 0,3 µm, and particular process parameters.

Proppants of a medium strength have been disclosed in US patent US4879181. These proppants have been obtained from clay and bauxite, and they comprise at least 40% of clay. Such proppants have a specific gravity from 2,75 Mg/m³ to 3,4 Mg/m³. The product has a medium strength, i.e. 10 000 psi. The proppants are fired in a temperature from 1350°C to 1550°C for 4 to 20 minutes, preferably in the temperature from 1485°C to 1515°C for 4 to 8 minutes.

The Australian patent publication AU4769985 presents ceramic proppants having a medium strength, 10 000 psi, formed mainly of bauxite comprising 40% gibbsite and clay comprising 50% kaolinite. It is important that the ratio of Al₂O₃ to SiO₂ is from 2,2 to 4,0. Such proppants have a specific gravity above 3,0 Mg/m³, up to 3,7 Mg/m³.

The Russian patent publication RU2392295 discloses ceramic proppants, which are made from the following main components: aluminosilicates, bauxite, kaolin and residual products of aluminum oxide production. These proppants are fired in a temperature from 1000°C to 1550°C in a rotary furnace, and the obtained proppants have a specific gravity from 1,3 to 3,0 Mg/m³ and a size from 0,2 to 4,0 mm.

The US patent US4522731 discloses proppants having a medium strength, 10 000 psi, which are fired in the temperature from 1200°C to 1650°C. These proppants comprise from 40% to 60% of Al₂O₃ and from 36,5% to 56,5% of SiO₂. The proppants have a specific gravity below 3,0 Mg/m³. Their main component is Eufaula bauxite, mined from particular areas in the United States of America.

### SUMMARY OF THE INVENTION

It would be advantageous to provide ceramic proppants and a method for their manufacturing which result in a medium compression strength and a relatively low specific gravity, and which can be manufactured from main components which can be mined in Europe, in particular in the south-western part of the Fore-Sudetian Monocline.

The object of the invention are ceramic proppants made from a mixture of components, characterized in that they are made from a mixture of: plastic kaolinite clay from 10% to 50% by weight; white-firing clay from 10% to 50% by weight; bauxite from 40% to 60% by weight; and up to 10% by weight of treatment agents.

Preferably, the plastic kaolinite clay comprises from 20% to 35% by weight of Al₂O₃.

Preferably, the white-firing clay comprises from 21% to 39% by weight of Al₂O₃.

Preferably, the bauxite comprises from 50% to 64% by weight of Al₂O₃ and up to 11 % by weight of Fe₂O₃, preferably up to 5% of Fe₂O₃.

The appropriate content of Fe₂O₃ enables to obtain the desired strength and specific gravity of the product. Excessive amount of Fe₂O₃ is not desirable, as it increases the specific gravity of proppants and therefore decreases the applicability and overall costs of extraction of hydrocarbons. Excessive amounts of Fe₂O₃ can be separated during the production process, but this shall be avoided.

The content of Al₂O₃ in the proppants is from 50% to 67% by weight. The content of SiO₂ is from 21 % to 40% by weight. The specific gravity of proppants is from 3,0 Mg/m³ to 3,4 Mg/m³, and the bulk density is from 1,8 Mg/m³ to 2,2 Mg/m³.

The object of the invention is also a method for manufacturing of ceramic proppants from a mixture of clays and bauxite, i.e. a mixture of plastic kaolinite clay in the amount of from 10% to 50% by weight; white-firing clay in the amount from 10% to 50%; bauxite in the amount from 40% to 60% by weight; and up to 10% of treatment agents.

### MODES FOR CARRYING OUT THE INVENTION

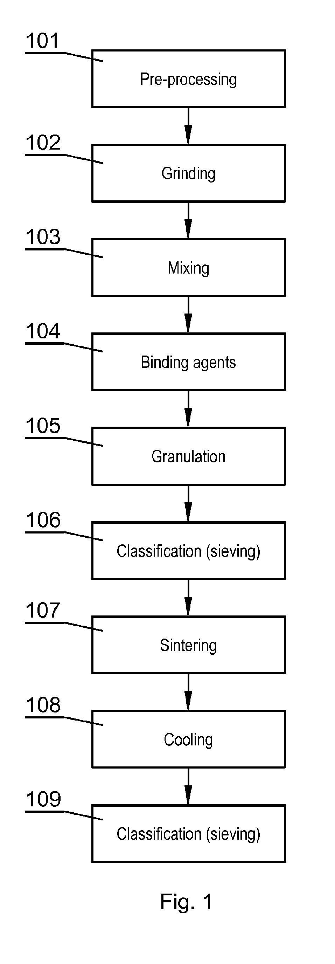

The invention is shown by means of exemplary embodiments. Fig. 1 showing the steps of the method for manufacturing the proppants according to the invention.

### RAW MATERIALS USED

The raw materials used to manufacture the proppants, i.e. plastic kaolinite clay and white-firing clay are obtained from European areas which are located in the south-western part of the Fore-Sudetian Monocline, wherein clays having the specific content of Al₂O₃ are available.

The results of chemical analysis of the plastic kaolinite clay performed by X-Ray fluorescence (XRF) are shown in the table below, indicating the percentage components of the main oxides:

| **Chemical component** | **Content [%]** |
|---|---|
| Al₂O₃ | 20 - 35 |
| SiO₂ | 57 - 70 |
| Fe₂O₃ | 0,5 - 10 |

The results of analysis of the mineral content of the plastic kaolinite clay performed by X-Ray diffraction (XRF) are shown in the table below:

| **Mineral component** | **Content [%]** |
|---|---|
| Kaolinite | 45 - 60 |
| Illite | 10 - 25 |
| Microcline | 5 - 10 |
| Quartz | 15 - 40 |

The white-firing clay used in the invention to obtain the ceramic mass has a composition similar to natural kaolins due to high content of Al₂O₃. The white-firing clay from the Fore-Sudetian Monocline has the following contents:

| **Chemical component** | **Content [%]** |
|---|---|
| Al₂O₃ | 21 - 39 |
| SiO₂ | 55 - 65 |
| Fe₂O₃ | 0,5 - 2,0 |

The main component of the used clays is kaolinite. The second component is illite, but its content is much lower than that of kaolinite. Another, non-clay component is quartz and its content is relatively high. The plastic kaolinite clay used to prepare the ceramic mixture plasticizes it, therefore it has good forming properties and allows to form granules having high roundness, above the minimal value of 0,7 set for ceramic proppants by the ISO 13503-2:2006/A1 standard. It is necessary and desirable during mechanical granulation. The further advantage of using this type of clay is the strength of the fired proppants - on average, above 10 000 psi. This is caused by the high amounts of glass phase during treatment, which leads to many advantageous physicochemical transformations.

Bauxite used to form the ceramic mass may be obtained from Sardinia, Greece, Hungary, Australia, Brasil and other regions where bauxite of desired parameters is available. It is essential for the bauxite to have not only the desired Al₂O₃ content (which impacts the main properties of the product, such as the compression strength), but also low level of impurities and Fe₂O₃ content of up to 11 %, preferably up to 5%. Both calcined bauxite and not calcined bauxite can be used. Not calcined bauxite used to form the ceramic mixture had the following chemical content (main oxides):

| **Chemical component** | **Content [%]** |
|---|---|
| Al₂O₃ | 50 - 64 |
| SiO₂ | 7 - 20 |
| Fe₂O₃ | 2 - 11 |

The results of analysis of the mineral content of the raw bauxite used to form the ceramic mass, performed by X-Ray diffraction (XRF), are shown in the table below:

| **Mineral content** | **Content [%]** |
|---|---|
| Boehmite | 50 - 65 |
| Kaolinite | 20 - 45 |
| Calcite | 2 - 5 |
| Quartz | 1 - 5 |

The chemical contents of the raw materials depend on their source and may differ substantially among sources. It is important for the invention that bauxite has a high content of Al₂O₃, i.e. above 50%, as well as a low content of CaO and impurities such as fluorides, as well as below 11% of Fe₂O₃, preferably below 5%. The content of particular components directly affects the obtained proppants having a medium strength.

Calcination is a form of heat treatment of material, which leads to decomposition of some organic components, phase transformations and removal of water from the crystalline structure. The process involves heating the material in a particular temperature for a particular time. For bauxite, calcination causes desirable polymorphic transformation of aluminum oxide from the gamma form (y) to the alfa form (α). Both forms differ mainly by the strength, which is essential for the invention. The stronger the form of the component, the stronger will be the final product, which is very important for the proppants and increases their applicability. The calcination results in concentration of oxides in the material, for example concentration of aluminum oxide Al₂O₃, which results in increase of parameters of raw materials used to manufacture the proppants, and better useful parameters of the obtained proppants.

### METHOD FOR MANUFACTURING OF THE CERAMIC PROPPANTS

The method for manufacturing of the ceramic proppants having a medium strength, according to the invention, is carried out according to the steps shown in Fig. 1.

in step 101 the raw materials are subject to pre-processing, comprising mainly calcination of the materials and drying. Both processes are carried out to remove water and naturally-occurring organic impurities from the materials. Furthermore, the phase transformations caused by the temperature during calcination, impact the properties of the material. It is also important to perform initial fragmentation of the material, i.e. rough fragmentation, such as to meet technological parameters.

After initial fragmentation of the material, grinding is performed in step 102. This step can be also called a fine fragmentation. The materials are grinded until they reach a particle size below 20 µm, and then below 5 µm. After grinding and separation of the fractions which do not meet the technological requirements, the materials are mixed in step 103 according to the predefined ratios and then passed to step 105 - granulation, which is preceded by step 104 - binding agents addition.

Granulation, also called pelletization, may be carried out mechanically or by spray drying. Mechanical granulation is carried out in R-series mixers provided by the company EIRICH, or other mixers having similar use parameters. The granulated material is then sieved in step 106, in other words it is classified, in order to eliminate grains which are oversized and undersized. Proppants obtained by mechanical granulation are characterized by a higher crushing strength, a higher specific gravity and a higher bulk density. Proppants granulated by spray drying are characterized by lower crushing strength, lower specific gravity and lower bulk density, but higher roundness. The grains that comply with the technical requirements are then passed to the next stage.

In the step 104, binding agents are added to the ceramic mixture in order to allow granules to be formed and to provide good binding properties to form aggregates. The agents allow to obtain round beads, so-called green pellets. Selection of appropriate agent and its amount depends on the properties of the materials. Granules exiting the granulator will have a size of about 150 to 1700 µm (i.e. from about 12 to 100 U.S. mesh).

The next stage involves firing of the obtained granules in a rotary furnace in step 107. in the present invention, the green pellets are fired in a temperature from 1350°C to 1450°C for 180 to 600 minutes, such as to obtain proppants having Al₂O₃ content from 50% to 67% by weight and SiO₂ content from 21 % to 40% by weight. The specific gravity of the proppants is from 3,0 Mg/m³ to 3,4 Mg/m³ and the bulk density is from 1,8 Mg/m³ to 2,2 Mg/m³. It is essential to use an appropriate firing curve, which is can be achieved only in a particularly configured rotary furnace. When the furnace rotates around its axis, the material that is placed within is subject to even temperature. The furnace is inclined by a few degrees to the horizontal and therefore the rotating material moves along the furnace. in the first stage the material is preheated in the temperature from 150°C to 350°C for 30 to 60 minutes, next it is sintered in the temperature from 1350°C to 1450°C (preferably from 1380°C to 1430°C) for 180 to 600 minutes, and in the final stage the material is subject to cooling in a cooler to a temperature below 50°C, optimally from 30°C to 35°C. The cooling of the fired proppants in step 108 is an essential stage of the manufacturing process, as it minimizes the creation of heat strains, which lead to decohesion of the material. After being cooled, the proppants are subjected to final classification in step 109 to separate them to fractions. It is further advantageous to recuperate the heat created during the manufacturing process - the recovered and collected heat can be reused e.g. for preheating. The proppants are then packed into big bags and/or stored in silos.

### EXAMPLES

### Example 1

The following raw materials: 10% of plastic kaolinite clay, 30% of white-firing clay, 60% of bauxite, have been grinded in a ball mill to obtain grains having a size from 5 µm to 10 µm. The overgrains and undergrains were removed. Next, the materials were mixed to unify the mixture. The prepared ceramic mixture was granulated with binder, and the obtained granules were sieved to obtain 40/70 mesh fraction, which was then fired in a rotary furnace at the temperature of 1380°C. As a result, ceramic proppants were obtained having 64,49% of Al₂O₃ and 27,71% of SiO₂. The tests of that ceramic proppants have shown a specific gravity of 3,35 Mg/m³ and a bulk density of 2,10 Mg/m³. The compression strength of the proppants having a size 40/70 mesh was 7,2% at 10 000 psi. The roundness coefficient was 0,9 and the sphericity coefficient was similar.

### Example 2

The following raw materials: 10% of plastic kaolinite clay, 30% of white-firing clay, 60% of bauxite, have been grinded in a ball mill to obtain grains having a size from 5 µm to 10 µm. The overgrains and undergrains were removed. Next, the materials were mixed to unify the mixture. The prepared ceramic mixture was spray dried to a size of 40/70 mesh and fired in a rotary furnace at the temperature of 1380°C. Liquidifier was added to obtain liquid mass. As a result, ceramic proppants were obtained having 64,49% of Al₂O₃ and 27,71% of SiO₂. The tests of that ceramic proppants have shown a specific gravity of 3,30 Mg/m³ and a bulk density of 2,00 Mg/m³. The compression strength of the proppants was 7,6% at 10 000 psi. The roundness coefficient was 0,9 and the sphericity coefficient was similar.

### Example 3

The following raw materials: 20% of plastic kaolinite clay, 20% of white-firing clay, 60% of bauxite, have been grinded in a ball mill to obtain grains having a size from 5 µm to 10 µm. The overgrains and undergrains were removed. Next, the materials were mixed to unify the mixture. The prepared ceramic mixture was granulated with binder. After the granulation, a 40/70 mesh fraction was obtained which was fired in a rotary furnace at the temperature of 1400°C. As a result, ceramic proppants were obtained having 64,10% of Al₂O₃ and 27,95% of SiO₂. Tests of that ceramic proppants have shown a specific gravity of 3,31 Mg/m³, and a bulk density of 2,05 Mg/m³. The compression strength of such 40/70 mesh proppants was 7,3% at 10 000 psi. The roundness coefficient was 0,9 and the sphericity coefficient was similar.

### Example 4

The following raw materials: 20% of plastic kaolinite clay, 20% of white-firing clay, 60% of bauxite, have been grinded in a ball mill to obtain grains having a size from 5 µm to 10 µm. The overgrains and undergrains were removed. Next, the materials were mixed to unify the mixture. The prepared ceramic mixture was spray dried to a size of 40/70 mesh and fired in a rotary furnace at the temperature of 1400°C. Liquidifier was added to obtain liquid mass. As a result, ceramic proppants were obtained having 64,10% of Al₂O₃ and 27,95% of SiO₂. Tests of that ceramic proppants have shown a specific gravity of 3,25 Mg/m³, and a bulk density of 1,98 Mg/m³. The compression strength was 7,4% at 10 000 psi. The roundness coefficient was 0,9 and the sphericity coefficient was similar.

## Claims

1. Ceramic proppants **characterized in that** they are made of a mixture of raw components consisting of:
- plastic kaolinite clay from 10% to 50% by weight;
- white-firing clay from 10% to 50% by weight;
- bauxite from 40% to 60% by weight;
- and treatment agents up to 10% by weight.

2. The ceramic proppants according to claim 1, **characterized in that** the plastic kaolinite clay comprises from 20% to 35% by weight of Al₂O₃.

3. The ceramic proppants according to claim 1, **characterized in that** the white-firing clay comprises from 21% to 39% by weight of Al₂O₃.

4. The ceramic proppants according to claim 1, **characterized in that** the bauxite comprises from 50% to 64% by weight of Al₂O₃ and up to 11 % by weight of Fe₂O₃, preferably up to 5% of Fe₂O₃.

5. The ceramic proppants according to any of previous claims, **characterized in that** the ceramic proppants comprise from 50% to 67% by weight of Al₂O₃ and from 21 % to 40% by weight of SiO₂.

6. The ceramic proppants according to any of previous claims, **characterized in that** the specific gravity of the ceramic proppants is from 3,0 Mg/m³ to 3,4 Mg/m³, and the bulk density is from 1,8 Mg/m³ to 2,2 Mg/m³;

7. The ceramic proppants according to any of previous claims, **characterized in that** the plastic kaolinite clays and the white-firing clays are obtained from the south-western part of the Fore-Sudetian Monocline.

8. A method for manufacturing of ceramic proppants from a mixture of components which after being mixed is subject to mechanical grinding or spray drying such as to obtain granules having a size from 150 to 1700 µm (from 12 to 100 U.S. Mesh, ASTM E11 - 04, ISO 13503 - 2), firing and fractioning the fired granulate, **characterized in that** the mixture of raw materials is prepared from;
- plastic kaolinite clay from 10% to 50% by weight;
- white-firing clay from 10% to 50% by weight;
- bauxite from 40% to 60% by weight;
- and up to 10% by weight of treatment agents;
wherein the granulate is fired in a rotary furnace in the temperature from 1350°C to 1450°C for 180 to 600 minutes, to obtain proppants having Al₂O₃ content from 50% to 67% by weight, SiO₂ content from 21% to 40% by weight, specific gravity from 3,0 Mg/m³ to 3,4 Mg/m³ and bulk density from 1,8 Mg/m³ to 2,2 Mg/m³, depending on the firing time.
